# FASCICULE DE BREVET EUROPEEN

(11) **EP 4 020 764 B1**
(45) Date de publication et mention de la délivrance du brevet: **01.05.2024**
(21) Numéro de dépôt: 21215116.1
(22) Date de dépôt: 16.12.2021
(51) Int. Cl.: H02K 49/10, H02K 1/2706, H02K 15/03, H02K 7/06

(54) **VIS D'UN SYSTÈME VIS-ÉCROU MAGNÉTIQUE**
SCHRAUBE EINES MAGNETISCHEN SCHRAUBENMUTTER-SYSTEMS
SCREW OF A MAGNETIC SCREW-NUT SYSTEM

(30) Priorité: 23.12.2020 FR 2014101
(43) Date de publication de la demande: 29.06.2022
(73) Titulaire: EE-gine, 49100 Angers (FR)
(72) Inventeur: STREIFF, Frédéric, 49100 Angers (FR)
(74) Mandataire: Cabinet Chaillot

(56) Documents cités:
- CN-A- 102 447 365
- GB-A- 2 512 074
- US-A1- 2011 271 867

## Description

La présente invention concerne le domaine technique des moyens de transformation d'un mouvement de translation en un mouvement de rotation ou réciproquement, et porte plus particulièrement sur des vis pour systèmes vis-écrou magnétiques.

Les systèmes vis-écrou sont utilisés dans de nombreux domaines pour transformer un mouvement de rotation en un mouvement de translation ou un mouvement de translation en un mouvement de rotation. Les systèmes magnétiques présentent, par rapport aux systèmes mécaniques comme les vis à billes ou les vis à rouleaux satellites, l'avantage d'éviter les contacts mécaniques entre les pièces en mouvement, ce qui permet notamment de réduire l'usure et les bruits générés lors de leur utilisation.

De nombreux systèmes de vis-écrou magnétiques sont déjà décrits dans l'art antérieur et des documents récents divulguent des propositions pour améliorer les performances de ces systèmes. Par exemple, la demande de brevet européen EP3484024 A1 divulgue un système vis-écrou magnétique dans lequel la vis et l'écrou sont composés de segments, en matériau magnétisable, s'étendant suivant un axe longitudinal de la vis et entre lesquels sont fixés des aimants permanents. Sur chaque segment de vis et chaque segment d'écrou, des saillies sont formées de manière hélicoïdale suivant deux hélices qui permettent de guider des flux magnétiques nord et sud vers l'entrefer du système vis-écrou, afin de permettre les interactions magnétiques entre la vis et l'écrou.

Cependant, selon cette solution, les aimants permanents sont fixés de manière fixe aux segments de vis et aux segments d'écrou. Ainsi, lors du montage puis par la suite lors de son utilisation, il n'est pas possible d'effectuer des réglages de positionnement des éléments en fonction de leurs caractéristiques dimensionnelles. Des entrefers parasites, qui diminuent les performances magnétiques, peuvent être formés entre les aimants et les segments de vis, ainsi qu'entre les aimants et les segments d'écrou. Or, en l'absence de réglage, ces entrefers ne peuvent pas être supprimés. Par ailleurs, la méthode de fixation des aimants divulguée dans la demande de brevet EP3484024 A1 rend difficile la dépose et le réemploi des aimants permanents en fin de vie du système vis-écrou. Du fait de l'impact environnemental lié à la consommation de matériaux pour la fabrication des composants et à l'utilisation de ressources énergétiques pour leur fabrication et transport ainsi que pour l'utilisation des systèmes vis-écrou et des tensions économiques et/ou géopolitiques liées à l'approvisionnement de certains composants des aimants (dont les terres rares), il est nécessaire de proposer des systèmes permettant de démonter sans dommage le système et de réutiliser les composants qui ne sont pas hors d'usage tels que les aimants permanents ou les électro-aimants. L'état de l'art sur les machines électriques à aimants permanents montre que les aimants sont collés sur les parties magnétiques pour assurer leur tenue mécanique durant l'assemblage (les aimants s'attirent entre eux) et lors du fonctionnement de la machine. La dépose et le réemploi de ces aimants ne sont donc pas aisés (il faut, par exemple, délicatement chauffer la colle pour désassembler les aimants tout en évitant de les abîmer voire de les casser notamment en cas d'attraction magnétique avec des aimants de polarité différente avoisinants). Par conséquent, les solutions de l'art antérieur proposées pour les systèmes vis-écrou magnétiques présentent toujours des inconvénients et des améliorations de ces systèmes sont possibles, notamment un perfectionnement des vis magnétiques. Les documents US 2011/271867 A1, CN 102 447 365 A et GB 2 512 074 A illustrent également l'arrière-plan technologique d'une vis magnétique selon la revendication 1.

L'invention a notamment pour objectif de fournir une vis magnétique qui minimise les flux de fuites entre les hélices et les pièces de polarités opposées. Un autre objectif de l'invention est de fournir une vis magnétique qui diminue les entrefers parasites entre les pièces en contact afin d'améliorer ses performances magnétiques et mécaniques.

Un autre objectif de l'invention est de fournir une vis magnétique capable de fournir un champ magnétique hélicoïdal de polarité nord et sud sans fluctuation de valeur du champ magnétique autour de sa valeur moyenne.

Un autre objectif de l'invention est de réaliser une vis pour laquelle il est possible de démonter les aimants en vue de les réutiliser dans d'autres utilisations/applications et/ou en vue de les réemployer/recycler.

La présente invention vise donc, pour une vis magnétique, à apporter des solutions techniques au problème de l'existence d'entrefers parasites entre les aimants et les éléments magnétisables, au problème de la dépose des aimants permanents ou électro-aimants et au problème de la continuité des champs magnétiques hélicoïdaux formés par la vis magnétique dans l'entrefer d'un système vis-écrou.

Ainsi, la présente invention a pour objet une vis magnétique apte à être entraînée en rotation autour d'un axe et/ou en translation sur ledit axe, ladite vis magnétique étant constituée d'un nombre pair de pôles magnétiques et comprenant : un organe de transmission d'entraînement ; une tige cylindrique, la surface latérale externe de la tige cylindrique étant constituée par un matériau magnétisable et divisée en autant de secteurs de vis longitudinaux qu'il y a de pôles magnétiques sur la vis magnétique, chaque secteur de vis étant formé par l'une parmi une section de surface et une juxtaposition axiale de sections de surface, chaque secteur de vis étant séparé d'un secteur de vis adjacent par un espace inter-secteur s'étendant selon la direction longitudinale de la tige cylindrique, une alternance de parties en creux et de parties en saillie étant formées sur chaque secteur de vis, les parties en creux et les parties en saillie étant agencées de façon hélicoïdale sur la tige cylindrique de telle sorte que, sur une hélice donnée formée sur la surface latérale externe de la tige cylindrique, une partie en creux, respectivement une partie une saillie, formée sur un secteur de vis prolonge une partie en saillie, respectivement une partie en creux, formée de l'autre côté de l'espace inter-secteur sur le secteur de vis adjacent ; des ensembles magnétiques longitudinaux en même nombre qu'il y a de pôles magnétiques sur la vis magnétique, chaque ensemble magnétique longitudinal comprenant au moins un aimant et chaque ensemble magnétique longitudinal étant configuré pour être disposé dans un espace inter-secteur entre deux secteurs de vis adjacents et en contact avec deux secteurs de vis adjacents, une fois en contact, la face nord d'un ensemble magnétique longitudinal polarisant un secteur de vis en secteur de vis nord et la face sud dudit ensemble magnétique longitudinal polarisant un secteur de vis, adjacent au secteur de vis nord, en secteur de vis sud ; caractérisée par le fait que : au moins un ensemble magnétique longitudinal est constitué par deux cales en matériau magnétisable prenant en sandwich l'au moins un aimant et protégeant l'au moins un aimant mécaniquement, les cales étant biseautées de telle sorte que ledit au moins un ensemble magnétique longitudinal a une forme de coin en coupe transversale, et ledit au moins un ensemble magnétique longitudinal comporte également une pièce d'extrémité à chaque extrémité ; la vis magnétique comprend en outre un dispositif de support réglable, solidarisé à l'organe de transmission d'entraînement, sur lequel ledit au moins un ensemble magnétique longitudinal est monté mobile par l'intermédiaire des pièces d'extrémité entre une position basse distante des secteurs de vis et une position haute en contact avec les secteurs de vis à l'état monté de la vis magnétique ; et la vis magnétique est assemblée par liaison de chaque section de surface composant un secteur de vis à au moins l'un parmi un autre secteur de vis et le dispositif de support.

De préférence, tous les ensembles magnétiques longitudinaux sont du type comprenant deux cales et deux pièces d'extrémité afin d'être mobiles entre une position basse et une position haute.

Le dispositif de support réglable permet un réglage, en hauteur, indépendant et précis de la position de chaque pièce d'extrémité des ensembles magnétiques longitudinaux.

De préférence, le dispositif de support réglable est réalisé en matériaux non magnétisables.

Le réglage s'effectue, de préférence, par un système de vis, mais toute autre solution permettant de déplacer et de maintenir en position les pièces d'extrémité des ensembles magnétiques longitudinaux sur le dispositif de support réglable peut être envisagée.

Le réglage des ensembles magnétiques longitudinaux, permet de mettre complètement en contact par pression les éléments magnétiques et les éléments magnétisables de la vis afin d'empêcher la formation d'entrefers parasites entre les éléments magnétiques et les éléments magnétisables, et donc d'accroître les performances de la vis magnétique selon l'invention.

La conception de la vis magnétique selon l'invention permet également de grandement faciliter le démontage des aimants montés entre les secteurs de vis. En fin de vie du système vis-écrou, les aimants peuvent ainsi être retirés de la vis magnétique et réutilisés pour d'autres applications. Par ailleurs, les aimants sont mécaniquement protégés entre les cales, ce qui permet de ne pas les briser lors des manipulations.

L'organe de transmission d'entraînement de la vis magnétique peut être de toute nature, permettant d'appliquer un mouvement de translation ou de rotation à la vis magnétique, ou au contraire de récupérer un mouvement de translation ou de rotation de la vis magnétique. L'organe de transmission d'entraînement peut notamment être disposé sur un demi-arbre solidaire du dispositif de support réglable à au moins l'une des extrémités de la vis magnétique, le demi-arbre offrant des prises pour un élément extérieur. Un demi-arbre et le dispositif de support étant par exemple formés d'un seul tenant ou fixés à l'aide de vis, sans limitation de la présente invention à ces solutions.

Dans la présente invention, l'expression « secteur de vis » est entendue comme désignant une section longitudinale de la surface périphérique de la tige de la vis. Un secteur de vis peut être, selon la présente invention, d'un seul tenant ou constitué de plusieurs éléments, un secteur de vis donné ayant une seule et même polarité.

Selon l'invention, par matériau magnétisable, on entend un matériau qui peut être magnétisé sous l'effet d'un champ magnétique extérieur audit matériau. Il est précisé que la notion de « matériau magnétisable » utilisée pour décrire l'invention est étendue aux matériaux magnétiques et matériaux ferromagnétiques. Parmi les matériaux magnétisables figurent notamment la fonte, le fer doux, et les matériaux magnétiques doux composites SMC (acronyme de l'anglais Soft Magnetic Composite - composite magnétique doux).

Le matériau constituant les cales ayant des propriétés mécaniques de résistance permettant de protéger les aimants permanents, et des propriétés magnétiques permettant d'être très peu reluctant. Il pourrait par exemple être constitué d'alliages de type acier inoxydable magnétique tels que l'alliage Z30C13, d'alliages de type acier oxydable magnétique tels que l'alliage XC10, ou d'acier électrique pour machines électriques tel que les tôles en fer silicium. De préférence, chaque ensemble magnétique longitudinal a une forme de coin à profil sensiblement trapézoïdal en coupe transversale.

De préférence encore, des surfaces d'extrémité radiales des secteurs de vis, en regard d'un espace inter-secteur respectif, sont configurées de manière à maximiser une zone de contact entre lesdits secteurs de vis et l'ensemble magnétique longitudinal respectif.

Par « sensiblement trapézoïdal », on entend une forme de trapèze isocèle, la petite base du trapèze étant destinée, en utilisation une fois la vis assemblée, à être positionnée distalement par rapport à l'axe de la vis, la grande base du trapèze isocèle étant donc positionnée de manière proximale par rapport à l'axe de la vis, de telle sorte que les côtés du trapèze soient en contact avec des surfaces d'extrémité radiales des secteurs de vis, l'inclinaison des côtés latéraux du trapèze permettant l'ajustement de l'ensemble magnétique longitudinal entre deux surfaces d'extrémité radiales adjacentes par l'intermédiaire du dispositif de support réglable.

Selon un mode de réalisation, le dispositif de support réglable comprend un arbre central parallèle à l'axe longitudinal de la vis magnétique.

L'arbre central et l'axe longitudinal de la vis magnétique ont alors la même direction.

L'utilisation d'un arbre central permet de faciliter le montage de la vis.

Dans ce mode de réalisation, l'arbre central comprend, de préférence, l'organe de transmission d'entraînement de la vis magnétique, qui permet d'appliquer un mouvement de translation ou de rotation à la vis magnétique, ou au contraire de récupérer un mouvement de translation ou de rotation de la vis magnétique. L'arbre central peut ainsi se prolonger de part et d'autre de l'étendue de la vis pour offrir des prises et l'organe de transmission d'entraînement peut notamment être un pignon monté sur l'arbre, un arbre cannelé ou un arbre présentant une rainure dans laquelle peut être insérée une clavette.

De préférence encore, l'arbre central est réalisé en un matériau non magnétisable afin d'empêcher un court-circuit magnétique dans la vis.

Selon un mode de réalisation, la tige cylindrique est formée par un assemblage de concentrateurs dits nord et sud ; un concentrateur nord, respectivement sud, comprenant autant de sections de surface qu'il y a de secteurs de vis polarisés nord, respectivement sud, et un élément central à partir duquel s'étendent des bras configurés pour relier chaque section de surface dudit concentrateur de flux à l'élément central respectif ; et l'élément central d'un concentrateur de flux étant configuré pour relier le concentrateur de flux à l'arbre central.

Cette configuration permet de faciliter le positionnement des sections de surface, de faciliter le montage de la vis magnétique et d'assurer la tenue mécanique de la vis lors de la mise en contact par pression des secteurs de vis et des ensembles magnétiques longitudinaux pour éliminer les entrefers entre les éléments magnétiques et les éléments magnétisables.

Selon un mode de réalisation, au moins une des sections de surface est reliée à l'arbre central.

De préférence toutes les sections de surface sont reliées à l'arbre central, cette configuration permet à chaque secteur de vis d'être relié à l'arbre central de manière à assurer la tenue mécanique de la vis lors de la mise en contact par pression des secteurs de vis et des ensembles magnétiques longitudinaux pour éliminer les entrefers entre les éléments magnétiques et les éléments magnétisables.

La liaison des sections de surfaces à l'arbre central permet également de faciliter le montage de la vis et d'améliorer le positionnement des secteurs de vis.

De préférence encore, les secteurs de vis sont reliés à l'arbre central de manière à être solidaires en rotation avec celui-ci. La liaison peut, par exemple, être réalisée sous la forme d'un collage, d'un frettage ou d'un arbre central rainuré sur lequel sont enfilés les secteurs de vis comprenant une nervure s'engageant avec la rainure de l'arbre central. La présente invention n'est néanmoins pas limitée à ces solutions.

Selon un mode de réalisation, au moins une section de surface est reliée à au moins un secteur de vis adjacent, dans une direction radiale, polarisé de manière opposée.

L'au moins une section de surface étant par exemple reliée à un secteur de vis adjacent polarisé de manière opposée par l'intermédiaire d'évidements, formés dans les éléments respectifs, reliés entre eux par une tige recourbée en U à la manière d'une agrafe réalisée en matériau non magnétisable afin d'empêcher un court-circuit magnétique entre les secteurs de vis.

Cette solution est un mode de réalisation préféré mais toute autre solution technique permettant de relier une section de surface à un secteur de vis adjacent, dans une direction radiale, polarisé de manière opposée, peut être envisagée.

Par matériau non magnétisable, on entend matériau qui ne peut pas être magnétisé sous l'effet d'un champ magnétique extérieur audit matériau. Cette notion couvre aussi la notion de matériau amagnétique. Voici quelques exemples de matériaux non-magnétisables : plastique, cuivre et aluminium.

De préférence, chaque section de surface est reliée aux deux secteurs de vis adjacents, dans des directions radiales, polarisés de manière opposée, cette configuration permet donc à chaque secteur de vis d'être relié aux secteurs de vis adjacents de manière à assurer la tenue mécanique de la vis lors de la mise en contact par pression des secteurs de vis et des ensembles magnétiques longitudinaux pour éliminer les entrefers entre les éléments magnétiques et les éléments magnétisables.

Selon un mode de réalisation, au moins une section de surface est reliée, par un élément autre qu'un ensemble magnétique longitudinal, au dispositif de support réglable, et le cas échéant sur une partie autre que l'arbre central.

De préférence, toutes les sections de surface situées aux extrémités des secteurs de vis sont reliées au dispositif de support réglable.

Idéalement, toutes les sections de surface de la vis magnétique sont reliées au dispositif de support réglable.

Un exemple, non limitatif, d'éléments permettant cette liaison sont des trous traversants formés, en correspondance, dans les sections de surfaces et le dispositif de support et dans lesquels sont insérées des tiges de maintien s'étendant à travers la tige cylindrique et le dispositif de support.

De préférence, les tiges de maintien sont réalisées en matériau non magnétisable pour faciliter le montage et l'enfilage des tiges de maintien dans les trous traversants.

En complément, des tenons et de mortaises respectivement disposés sur deux éléments adjacents, dans une direction axiale de la vis, parmi une section de surface et le dispositif de support réglable, peuvent être utilisés.

La liaison des sections de surface au dispositif de support réglable permet le bon positionnement angulaire des secteurs de vis lors du montage et la tenue mécanique de la vis lors de la mise en contact par pression des secteurs de vis et des ensembles magnétiques longitudinaux pour éliminer les entrefers entre les éléments magnétiques et les éléments magnétisables.

Selon un mode de réalisation, au moins une section de surface est reliée à au moins une autre section de surface du même secteur de vis.

De préférence, chaque section de surface d'un secteur de vis est reliée à la section de surface qui la précède et à la section de surface qu'elle précède, dans une direction axiale de la vis magnétique.

Idéalement, chaque section de surface d'un secteur de vis est reliée à toutes les autres sections de surface dudit secteur de vis.

Un exemple, non limitatif, d'éléments permettant cette liaison sont des trous traversants formés, en correspondance, dans les sections de surfaces, dans lesquels sont insérées des tiges de maintien s'étendant à travers la tige cylindrique.

De préférence, les tiges de maintien sont réalisées en matériau non magnétisable pour faciliter le montage et l'enfilage des tiges de maintien dans les trous traversants.

En complément, des tenons et de mortaises respectivement disposés sur deux sections de surfaces adjacentes, dans une direction axiale de la vis, peuvent être utilisés.

La liaison, entre elles, des sections de surface d'un secteur de vis permet leur bonne mise en position lors du montage et un maintien en position dudit secteur de vis en utilisation.

Selon un mode de réalisation, au moins une section de surface est reliée à au moins un autre secteur de vis de même polarité.

De préférence, toutes les sections de surfaces sont reliées à un autre secteur de vis de même polarité par un partie s'étendant radialement réalisée en matériau magnétisable.

On comprendra que la configuration de la vis magnétique selon ce mode de réalisation permet aux sections de surface d'être reliées à des secteurs de vis de même polarité de manière à assurer la tenue mécanique de la vis lors de la mise en contact par pression des secteurs de vis et des ensembles magnétiques longitudinaux pour éliminer les entrefers entre les éléments magnétiques et les éléments magnétisables.

On pourra envisager des configurations plus ou moins complexes dans lesquelles les sections de surfaces reliées ensemble sont avantageusement choisies pour permettre la tenue mécanique de la vis lors de la mise en contact des secteurs de vis et des ensembles magnétiques longitudinaux. L'invention n'est pas limitée à cet égard.

Selon un mode de réalisation, la vis magnétique comprend en outre au moins une entretoise configurée pour permettre un positionnement axial relatif d'au moins deux sections de surface.

La disposition d'entretoises entre les sections de surface permet le bon positionnement axial des secteurs de vis lors du montage et un maintien en position plus précis des secteurs de vis en utilisation.

Par exemple, chaque section de surface peut être solidaire d'une partie respective, s'étendant radialement vers l'axe longitudinal de la vis magnétique, entre lesquelles sont disposées les entretoises. Les entretoises peuvent également, le cas échéant, être enfilées sur l'arbre central.

L'utilisation d'un matériau non magnétisable pour réaliser les entretoises permet d'empêcher un court-circuit magnétique entre des sections de surface de polarités opposées.

Selon un mode de réalisation, le dispositif de support réglable comprend deux éléments de support ayant chacun autant de rainures qu'il y a d'ensembles magnétiques longitudinaux comprenant des pièces d'extrémité, lesdites rainures étant configurées pour recevoir les pièces d'extrémité desdits ensembles magnétiques longitudinaux, et les pièces d'extrémité desdits ensembles magnétiques longitudinaux étant mobiles dans lesdites rainures par réglage du dispositif de support réglable.

Le réglage s'effectue, de préférence, par un système de vis, mais toute autre solution permettant de déplacer en translation et de maintenir en position les pièces d'extrémité des ensembles magnétiques longitudinaux sur les éléments de support peut être envisagée.

Selon un mode de réalisation, les secteurs de vis sont engagés avec le dispositif de support réglable et la vis magnétique comprend au moins un élément axial solidaire du dispositif de support réglable configuré pour permettre de serrer axialement la tige cylindrique.

De préférence le serrage axial peut être réalisé à l'aide de l'arbre central ou des tiges de maintien.

Selon un mode de réalisation, les sections de surface sont fabriquées par empilement de tôles réalisées en matériau magnétisable.

Les tôles sont de préférence assemblées par collage ou soudage.

Les sections de surface peuvent également être formées d'un seul tenant, par exemple par moulage, usinage ou impression tridimensionnelle.

L'utilisation de tôles empilées réalisées en matériau magnétisable permet de conférer aux sections de surface des propriétés magnétiques leurs permettant d'être très peu reluctantes.

Le cas échéant, les formes des tôles sont configurées pour relier les sections de surface entre elles ou à l'arbre central.

Selon un mode de réalisation, la vis magnétique comprend en outre des aimants en forme de tuile dits nord et dits sud fixés sur des secteurs de vis, les aimants en forme de tuile dits nord étant disposés, avec leur face polarisée nord orientée vers l'extérieur, dans des parties en creux de secteurs de vis polarisés sud, et des aimants en forme de tuile dits sud étant disposés, avec leur face polarisée sud orientée vers l'extérieur, dans des parties en creux de secteurs de vis polarisés nord.

Le placement, sur les parties en creux des secteurs de vis, d'aimants en forme de tuiles dont la face orientée vers l'extérieur est de polarité opposée à la polarité des secteurs de vis sur lesquels ils sont placés, permet de supprimer la zone morte du champ magnétique dans l'entrefer d'un système vis-écrou, de réduire les ondulations des champs magnétiques le long des hélices polarisées respectivement nord et sud, de supprimer les flux de fuite, et ainsi d'augmenter la valeur moyenne des champs magnétiques nord et sud dans l'entrefer d'un système vis-écrou.

Selon un mode de réalisation, au moins une section d'extrémité d'au moins l'une des parties en saillie comprend une protubérance qui s'avance obliquement, dans l'espace inter-secteur adjacent, vers la partie en creux opposée du secteur de vis adjacent, dans une direction radiale, polarisé de manière opposée.

Lesdites protubérances permettent d'améliorer la continuité, entre les secteurs de vis et à travers les espaces inter-secteur, des champs magnétiques nord et sud dans l'entrefer d'un système vis-écrou.

Le cas échéant, lesdites protubérances permettent une continuité du champ magnétique entre la saillie du secteur de vis qui porte la protubérance et l'aimant en forme de tuile lui faisant face de même polarité.

Selon un mode de réalisation, l'au moins un aimant des ensembles magnétiques longitudinaux est constitué par l'un parmi des aimants permanents et des électro-aimants.

L'association d'une pluralité d'aimants disposés côte à côte permet d'obtenir la longueur souhaitée pour les ensembles magnétiques longitudinaux.

Les aimants compris par les ensembles magnétiques longitudinaux peuvent être choisis parmi des aimants permanents et des électro-aimants, par exemple, en fonction de l'encombrement et de l'intensité des champs magnétiques souhaités.

On va maintenant décrire ci-après un mode de réalisation particulier de la présente invention, à titre d'exemple non limitatif, avec référence aux dessins annexés.

Sur ces dessins :
[Fig. 1] est une vue en perspective de la vis magnétique à l'état assemblé, selon la présente invention.
[Fig. 2] est une vue en perspective de la tige cylindrique creuse et du dispositif de support réglable de la vis magnétique de la Figure 1.
[Fig. 3] est une vue en perspective éclatée de la vis magnétique de la Figure 1, sur laquelle le dispositif de support réglable n'est pas représenté.
[Fig. 4] est une vue en perspective d'un ensemble coin de la Figure 1.
[Fig. 5a] est une vue en perspective éclatée du dispositif de support réglable de la Figure 1, avec les ensembles magnétiques longitudinaux en position haute.
[Fig. 5b] est une vue en perspective du dispositif de support réglable de la Figure 1, avec les ensembles magnétiques longitudinaux en position basse.
[Fig. 6] est une vue en coupe de la vis magnétique de la Figure 1, suivant un plan transverse.
[Fig. 7] est une vue en perspective de la vis magnétique selon un second mode de réalisation.
[Fig. 8] est une vue en perspective de la vis magnétique de la Figure 7 sur laquelle la tige cylindrique n'est pas représentée.
[Fig. 9] est une vue en perspective de la vis magnétique de la Figure 7 sur laquelle le dispositif de support réglable n'est pas représenté.

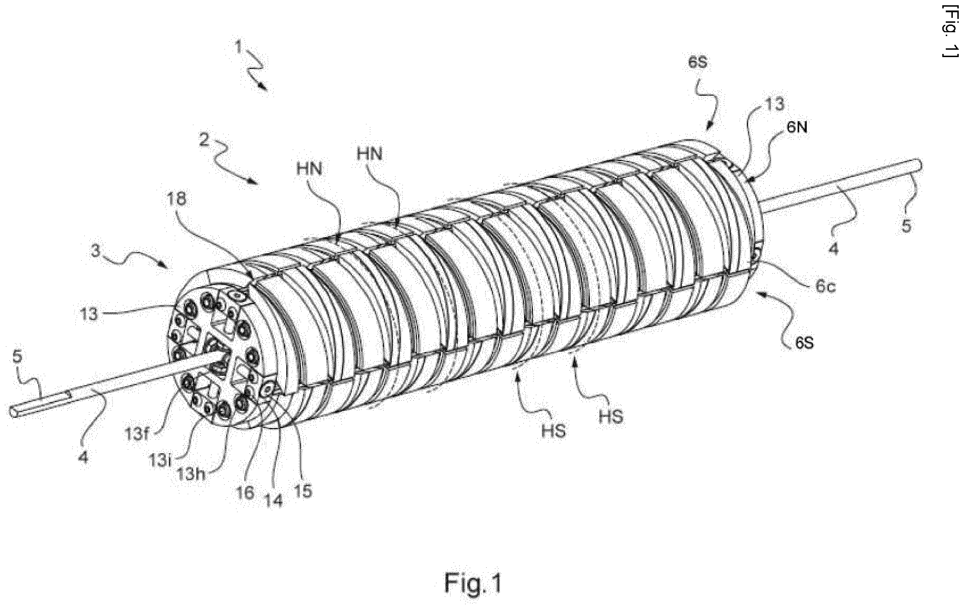

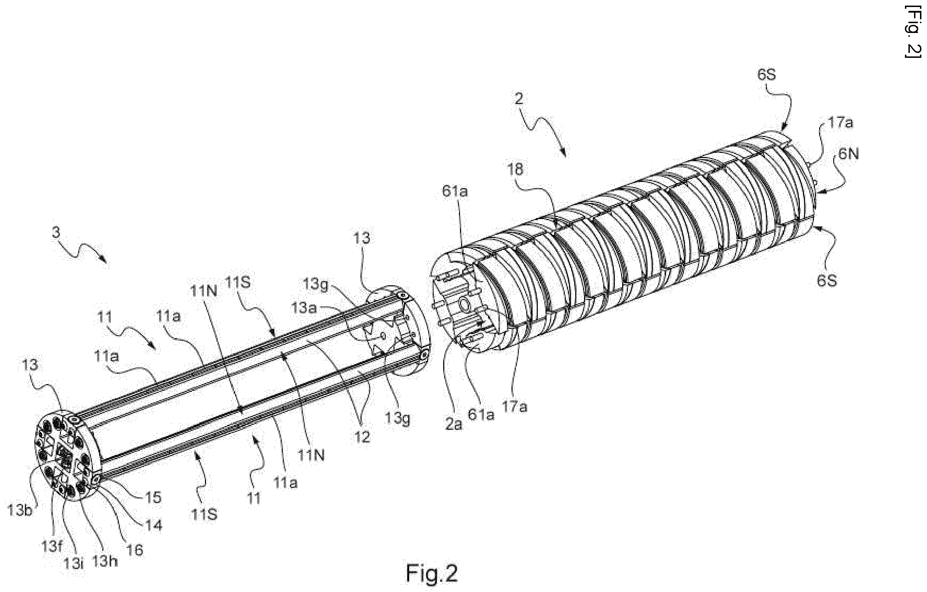

Si l'on se réfère tout d'abord aux Figures 1 et 2, on peut voir que l'on y a représenté une vis magnétique 1 selon un mode de réalisation préféré de la présente invention. La vis magnétique 1 comprend une tige cylindrique creuse 2 et un dispositif de support réglable 3 reçu dans un espace intérieur 2a de la tige cylindrique 2. Ledit dispositif de support réglable 3 comprend un arbre central 4 qui s'étend à travers ladite tige cylindrique 2 et ledit dispositif de support réglable 3. De préférence, le dispositif de support réglable 3 est réalisé en matériaux non magnétisables.

La vis magnétique 1 comprend également un organe de transmission d'entraînement 5 configuré pour entraîner la vis magnétique 1 en rotation autour d'un axe longitudinal et en translation sur ledit axe ou au contraire pour récupérer un mouvement de translation ou de rotation de la vis magnétique 1. Dans le mode de réalisation illustré sur les Figures 1 à 6, l'organe de transmission d'entraînement 5 se présente sous la forme de méplats disposés à des extrémités de l'arbre central 4, mais pourrait prendre d'autres formes selon des variantes de l'invention.

Selon le mode de réalisation illustré sur les Figures 1 à 6, la vis magnétique 1 est une vis magnétique à quatre pôles, la tige cylindrique 2 comprend donc quatre secteurs de vis réalisés en matériau magnétisable, comprenant deux secteurs de vis dits « nord » 6N et deux secteurs de vis dits « sud » 6S disposés de manière alternée autour de l'axe longitudinal et séparés par des espaces inter-secteur 18 s'étendant longitudinalement sur toute la longueur de la tige cylindrique 2. Selon des variantes de l'invention, la vis magnétique 1 peut comprendre un autre nombre pair de secteurs de vis.

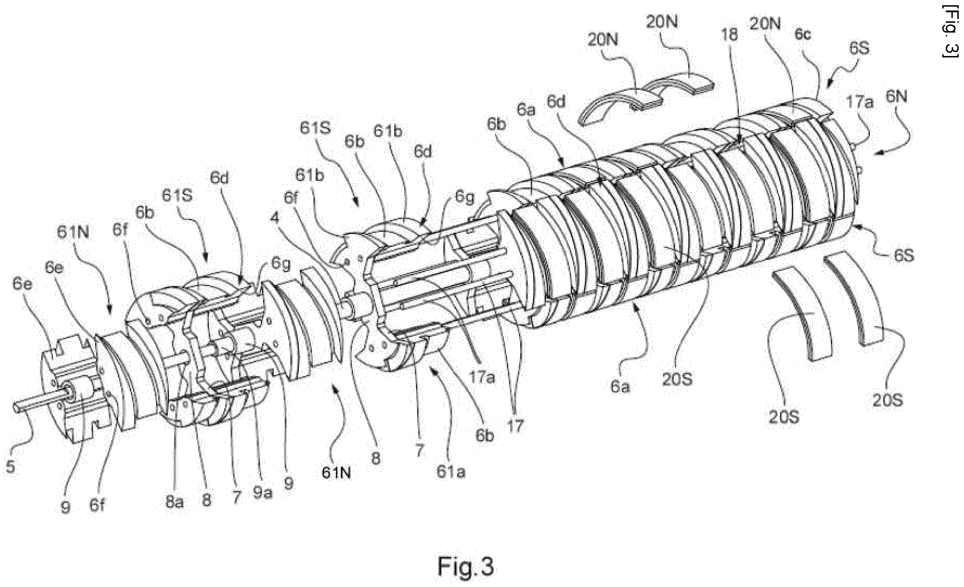

Si l'on se réfère maintenant à la Figure 3, on peut voir que chaque secteur de vis 6N, 6S comprend une pluralité de parties en saillie 6a et de parties en creux 6b formées de manière alternée sur une surface externe 6c du secteur de vis. Les parties en saillie 6a, respectivement les parties en creux 6b, formées sur les secteurs de vis nord 6N sont décalées par rapport aux parties en saillie 6a, respectivement aux parties en creux 6b, formées sur les secteurs de vis sud 6S adjacents, de telle sorte que la section d'extrémité 6d de chaque partie en saillie 6a formée sur un secteur de vis 6N, 6S fait face à une partie en creux 6b sur le secteur de vis 6N, 6S adjacent, dans une direction radiale, qui est de polarité opposée.

Les parties en saillie 6a et les parties en creux 6b sont en outre disposées de manière hélicoïdale pour former deux hélices discontinues sur la tige cylindrique 2, deux parties consécutives d'une hélice étant séparées par un espace inter-secteur. Comme cela sera décrit ci-après, les hélices sont polarisées de manière opposée et forment une hélice nord HN et une hélice sud HS.

Afin de faciliter la fabrication et le montage de la vis magnétique 1, les secteurs de vis nord 6N et les secteurs de vis sud 6S sont divisés en une pluralité de sections de surface 61a et sont formés par assemblage de multiples concentrateurs de flux dits nord 61N et sud 61S, respectivement.

Chaque concentrateur de flux nord 61N, respectivement chaque concentrateur de flux sud 61S, comprend un nombre de sections de surface 61a égal au nombre de secteur de vis nord 6N, respectivement de secteur de vis sud 6S. De plus, chaque section de surface 61a d'un concentrateur de flux comprend une partie en creux 6b disposée entre deux plots 61b faisant saillie radialement vers l'extérieur.

Les secteurs de vis nord 6N sont ainsi formés par une juxtaposition axiale des sections de surface 61a des concentrateurs de flux nord 61N, et les secteurs de vis sud 6S sont formés par une juxtaposition axiale des sections de surface 61a des concentrateurs de flux sud 61S. On comprend donc que les parties en saillie 6a des secteurs de vis 6N, 6S sont formées par une juxtaposition axiale de deux plots 61b de deux concentrateurs de flux adjacents, dans une direction longitudinale, de même polarité.

Il apparaîtra évident à l'homme du métier que la disposition d'une partie en creux 6b et de deux plots 61b sur une section de surface 61a n'est que l'une de nombreuses combinaisons permettant de former les parties en saillie 6a et les parties en creux 6b sur la surface externe 6c d'un secteur de vis 6N, 6S.

Pour assurer la tenue mécanique de la tige cylindrique 2, les sections de surface 61a des secteurs de vis nord 6N, respectivement des secteurs de vis sud 6S, sont reliés entre elles par des bras 7 s'étendant radialement et configurés pour relier mécaniquement les secteurs de vis 6N, 6S.

Des variantes de la présente invention peuvent également consister à utiliser des parties de jonction, par exemple en forme d'agrafe, configurées pour relier mécaniquement des secteurs de vis 6N, 6S adjacents, dans une direction radiale, de polarités opposées, les parties de jonction étant alors réalisées en un matériau non magnétisable pour empêcher un court-circuit magnétique.

Par ailleurs, pour améliorer la tenue mécanique de la tige cylindrique 2 et assurer le positionnement des secteurs de vis 6N, 6S, les sections de surface 61a sont reliées à l'arbre central 4 par un élément central 8 dans lequel est formé un trou 8a. Les concentrateurs de flux 61N, 61S, étant longitudinalement espacés par des entretoises 9 réalisées en un matériau non magnétisable, enfilées sur l'axe central 4 et disposés entre les éléments centraux 8, pour empêcher un court-circuit magnétique.

Selon le mode de réalisation préféré, les concentrateurs de flux (61N, 61S) sont fabriqués par un empilement de tôles en matériau magnétisable, les tôles étant maintenues entre elles par collage ou soudage. On comprendra que suivant des variantes du mode de réalisation préféré, les concentrateurs de flux (61N, 61S) peuvent également être obtenus par usinage ou moulage d'un matériau magnétisable.

Ainsi, les concentrateurs de flux (61N, 61S) sont réalisés en une seule pièce avec un élément central 8 et deux bras 7.

L'élément central 8 et les bras 7 sont avantageusement combinés pour limiter la quantité de matière nécessaire à la réalisation des secteurs de vis 6N, 6S.

De préférence, le diamètre interne du trou 8a de l'élément central 8 est configuré pour permettre d'enfiler un concentrateur de flux 61N, 61S sur une section d'entretoise 9a de plus faible diamètre.

On comprendra que le nombre de bras d'un concentrateur de flux 61N, 61S, selon le mode de réalisation préféré, dépend directement du nombre de secteurs de vis 6N, 6S et donc du nombre de pôles de la vis magnétique 1.

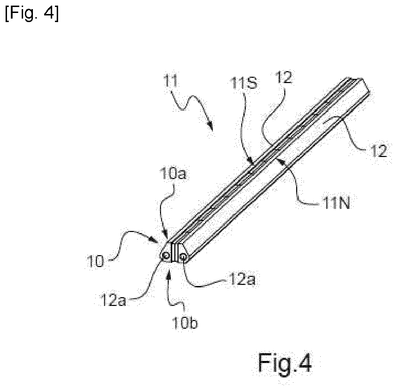

En se référant à la Figure 4, on peut voir que l'on a représenté un ensemble magnétique longitudinal 11 du dispositif de support réglable 3. Chaque ensemble magnétique longitudinal 11 comprend des aimants 11a disposés entre deux cales 12 réalisées en un matériau magnétisable, les cales 12 étant configurées de telle sorte que le profil 10 d'une section transversale d'un ensemble magnétique longitudinal 11 a une forme trapézoïdale isocèle. Cependant, la forme de coin n'est pas limitative et selon des variantes de la présente invention, le profil 10 d'une section transversale d'un ensemble magnétique longitudinal 11 peut avoir d'autres formes permettant de former un coin.

Les cales 12 sont également configurées de manière à protéger mécaniquement les aimants 11a des ensembles magnétiques longitudinaux 11 reçus entre deux cales 12. Les cales 12 sont notamment en acier (par exemple Z30C13 ou XC10) ou en tôles feuilletées (par exemple tôle fer silicium).

Selon le mode de réalisation préféré de la présente invention, chaque ensemble magnétique longitudinal 11 comprend une pluralité d'aimants permanents 11a juxtaposés, mais les ensembles magnétiques longitudinaux 11 pourraient également, en variante, comprendre des électroaimants.

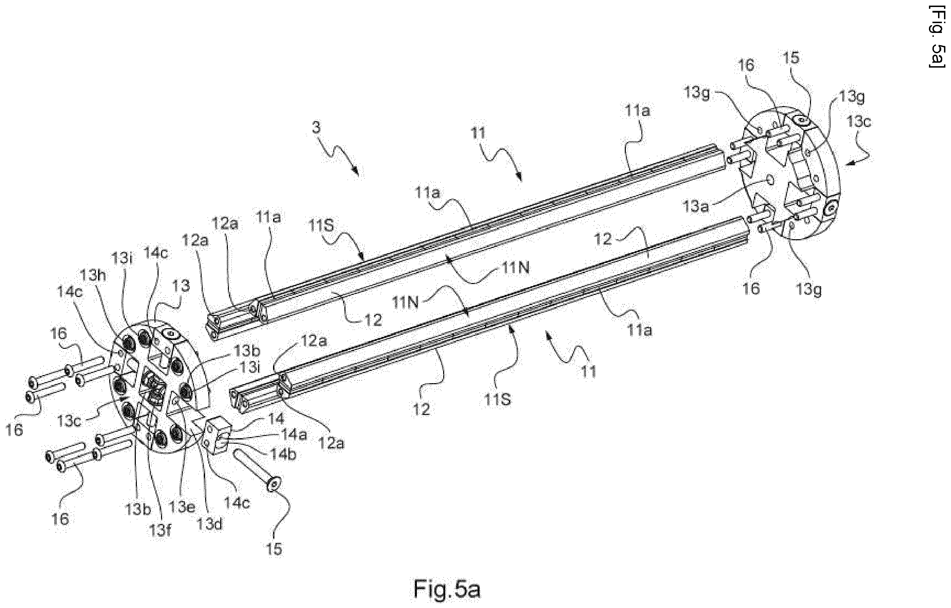

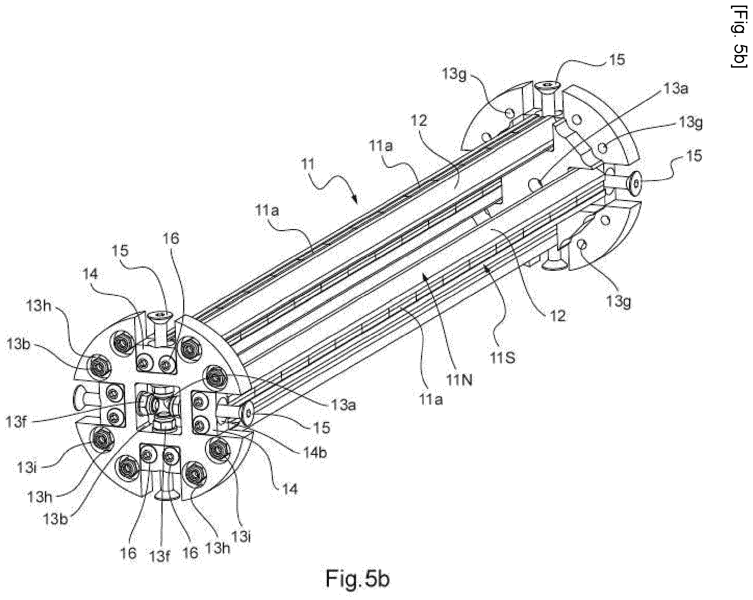

Si l'on se réfère aux Figures 5a et 5b, on peut voir que l'on y a représenté le dispositif de support réglable 3, lequel comprend deux éléments de support 13 identiques et disposés en miroir, de forme arrondie. Chaque élément de support 13 comprend un trou traversant 13a, central, configuré pour laisser passer l'arbre central 4 et débouchant dans une chambre 13b ouverte sur le côté distal transverse au trou 13c. Chaque élément de support 13 comprend également un nombre de rainures 13d radiales, équidistantes, égal au nombre de pôles de la vis magnétique 1. Un trou 13e est formé au fond des rainures 13d et débouche sur un élément taraudé 13f disposé dans la chambre 13b. Dans le mode de réalisation représenté sur les Figures 1 à 6, avec quatre pôles, il y a quatre rainures 13d, disposées sensiblement de forme de croix.

Les rainures 13d sont configurées pour recevoir une pièce d'extrémité 14, parallélépipédique, dans laquelle est formé un trou taraudé traversant 14a se terminant par une fraisure 14b sur le côté opposé au fond de la rainure 13d. L'élément taraudé 13f, le trou 13e de l'élément de support 13 et le trou taraudé 14a de la pièce d'extrémité 14 sont configurés pour être aptes à recevoir une vis de réglage 15 à tête tronconique. La vis de réglage 15 est configurée pour s'engager avec l'élément taraudé 13f et le trou taraudé 14a pour fixer et déplacer la pièce d'extrémité 14 en translation dans la rainure 13d, entre une position basse de montage, illustrée en Figure 5b, et une position haute d'utilisation, illustrée en Figure 5a.

En effet, après montage des vis de réglage 15 dans les trous des éléments de support 13e, les vis de réglage 15 et les éléments taraudés 13f sont solidarisés en rotation par exemple grâce à l'utilisation d'éléments taraudés 13f auto-freinés comprenant une bague incorporée du type Nylstop^{®} (marque enregistrée), ou par la réalisation d'un point de soudure entre la tête d'une vis de réglage 15 et l'élément taraudé 13f respectif, d'un collage des filets, d'un coup de pointeau ou toute autre solution technique permettant aux éléments taraudés 13f de tourner avec le vis de réglage respectif 15.

On comprend donc qu'une rotation d'une vis de réglage 15 permet le déplacement en translation de la pièce d'extrémité 14 correspondante.

En utilisation, une face des éléments taraudés 13f ou de la vis de réglage 15 est en contact avec l'arbre central 4, et une face opposée des éléments taraudés 13f est en contact avec l'élément de support respectif 13, comme illustré en Figure 1. Les vis de réglage 15 sont donc bloquées en translation et les pièces d'extrémité 14 sont maintenues en position à la hauteur souhaitée. Comme représenté en Figure 5a, la tête de la vis de réglage 15 est reçue dans la fraisure 14b de la pièce d'extrémité 14, lorsque la pièce d'extrémité 14 est en position haute, et ne dépasse pas de l'élément de support 13.

Il apparaîtra évident à l'homme du métier que les fraisures 14b et les têtes des vis de réglages 15 correspondantes sont l'une de nombreuses combinaisons permettant de positionner la vis de réglage 15 par rapport à la pièce 14. Par exemple, les fraisures 14b peuvent être remplacées par un lamage et les vis à tête fraisée 15 par des vis à tête plate.

Les pièces d'extrémité 14 comprennent également deux trous traversants 14c s'étendant transversalement au trou taraudé 14a et formés en correspondance de trous taraudés 12a formés dans les cales 12 d'un ensemble magnétique longitudinal 11. Les trous traversants 14c de la pièce d'extrémité 14 et les trous taraudés 12a des cales 12 sont configurés pour recevoir des vis de fixations 16 configurées pour fixer les ensembles magnétiques longitudinaux 11 aux pièces d'extrémité 14.

On comprendra donc que le dispositif de support réglable 3 permet, à l'aide des vis de réglage 15, de régler la position des ensembles magnétiques longitudinaux 11 fixés aux pièces d'extrémités 14 en rapprochant ou en éloignant ces dernières de l'axe longitudinal de la vis magnétique 1.

Afin de positionner angulairement les secteurs de vis 6N, 6S lors du montage et afin de garantir, en utilisation, le maintien en position des secteurs de vis 6N, 6S, formés par assemblage des concentrateurs de flux 61N, 61S, la vis magnétique 1 comprend un ensemble d'éléments de positionnement et de liaison disposés sur les secteurs de vis et de manière complémentaire sur les éléments de support 13 du dispositif de support réglable 3.

Les éléments de positionnement et de liaison comprennent des trous traversants 6f formés dans les secteurs de vis 6N, 6S et des tiges de maintien 17 enfilées dans lesdits trous traversants 6f, plus particulièrement, les trous traversants 6f étant formés dans les sections de surface 61a des concentrateurs de flux 61N, 61S.

Avantageusement, les éléments de support 13 du dispositif de support réglable 3 comprennent également des éléments de positionnement et de liaison sous la forme de trous traversants 13g, disposés en correspondance des trous traversants 6f des secteurs de vis 6N, 6S. Lesdits trous traversants 13g débouchent du coté extérieur 13c sur un lamage 13h recevant un écrou 13i configuré pour s'engager avec une extrémité filetée 17a d'une tige de maintien 17, et lesdites tiges de maintien 17 étant configurées pour serrer axialement les secteurs de vis 6N, 6S formés par les concentrateurs de flux 61N, 61S.

Selon des variantes de la présente invention, les éléments de positionnement et de liaison peuvent en outre comprendre des tenons et des mortaises placés de manière complémentaire sur les secteurs de vis 6N, 6S et les éléments de supports 13.

En se référant aux Figures 1 à 3, il est maintenant décrit un mode de montage de la vis magnétique 1 selon un mode de réalisation préféré de l'invention.

En partant de l'arbre central 4, une première entretoise 9 est enfilée et collée sur l'arbre central 4, ensuite un premier concentrateur de flux 61N, 61S est enfilé sur l'arbre puis sur la section d'entretoise 9a de plus faible diamètre pour être collé sur la première entretoise 9, déjà collée.

Après cela, une deuxième entretoise 9 est enfilée et collée sur l'arbre central 4, puis un deuxième concentrateur de flux 61N, 61S est enfilé sur l'arbre central 4 et sur la deuxième entretoise 9. Le deuxième concentrateur de flux 61N, 61S étant décalé de 90° par rapport au premier concentrateur de flux 61N, 61S et les deux concentrateurs de flux étant espacés l'un de l'autre par des espaces inter-secteur.

L'opération de collage est répétée autant de fois qu'il y a de concentrateur de flux 61N, 61S à monter sur la vis magnétique 1, chaque concentrateur de flux 61N, 61S étant décalé d'un angle par rapport au concentrateur de flux 61N, 61S qui le précède, qui dépend du nombre de pôle sur la vis magnétique 1.

En variante, le collage peut être remplacé par exemple par un frettage ou une combinaison de collage et frettage. On peut également envisager l'utilisation d'un arbre central 4 comprenant une rainure s'étendant selon une direction longitudinale dans laquelle sont engagées des nervures solidaires des concentrateurs de flux 61N, 61S. Dans le cas où les concentrateurs de flux 61N, 61S, sont montés en contact direct de l'arbre central 4, l'arbre central 4 est de préférence réalisé en matériau non magnétisable.

En parallèle, les ensembles magnétiques longitudinaux 11 sont assemblés en prenant en sandwich le nombre d'aimants 11a souhaité entre deux cales 12 et les pièces d'extrémité 14 sont montées sur les éléments de support 13.

Pour cela, les vis de réglage 15 sont enfilées dans les trous taraudés traversants 14a puis dans les trous 13e des éléments de support 13. Les éléments taraudés 13f sont placés dans la chambre 13b et les vis de réglage 15 sont vissées dans les éléments taraudés13f. Les vis de réglage 15 et les éléments taraudés13f sont alors solidarisés en raison de l'utilisation d'éléments taraudés13f auto-freinés comprenant une bague incorporée de type Nylstop^{®}. En variante, un point de soudure, un collage des filets ou un coup de pointeau peuvent par exemple être utilisés pour solidariser les vis de réglage 15 et les éléments taraudés13f.

Puis les vis de réglage 15 sont entraînées en rotation pour placer les pièces d'extrémité 14 en position basse, l'arbre central 4 est enfilé dans le trou traversant 13a d'un élément de support 13 de manière à laisser la chambre 13b de celui-ci ouverte sur l'extérieur et les ensembles magnétiques longitudinaux 11 sont enfilés à travers la tige cylindrique 2 dans l'espace intérieur 2a.

Les ensembles magnétiques longitudinaux 11 sont ensuite fixés, à l'aide des vis de fixation 16 s'engageant avec les trous taraudés12a des cales 12, aux pièces d'extrémité 14 respectives fixées à l'élément de support 13 dans lequel l'arbre central 4 a été enfilé. Puis le deuxième élément de support 13 est enfilé sur l'extrémité opposée de l'arbre central 4 de manière à laisser sa chambre 13b ouverte sur l'extérieur et les ensembles magnétiques longitudinaux 11 sont fixés aux pièces d'extrémité 14, fixées au deuxième élément de support 13, à l'aide des vis de fixation 16.

Après cela, les tiges de maintien 17 sont enfilées dans les trous traversants des sections de surfaces 6f et des éléments de support 13g et les extrémités filetées 17a des tiges de maintien 17 sont engagées avec des écrous 13i disposés dans les lamages 13h, ce par quoi la tige cylindrique 2 peut être serrée axialement.

Le positionnement radial des concentrateurs de flux 61N, 61S pendant le montage peut être assuré par un outil d'indexage.

On comprendra que d'autres modes de montage sont possibles et que l'invention n'est pas limitée à ce mode de montage, décrit à titre d'exemple.

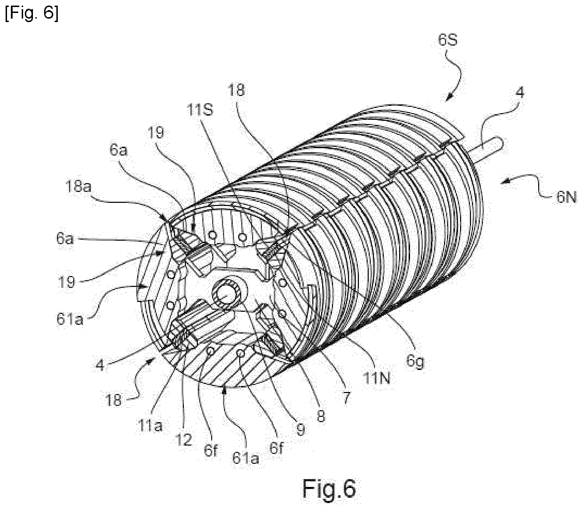

En se référant également à la Figure 6, il est maintenant décrit la façon dont les ensembles magnétiques longitudinaux 11 et les secteurs de vis 6N, 6S sont mis en contact pour polariser les hélices nord HN et sud HS.

Tout d'abord, lors du montage, les ensembles magnétiques longitudinaux 11 sont fixés au dispositif de support réglable 3 de manière à ce qu'une petite base 10a, du profil 10 trapézoïdal de la section transversale desdits ensembles magnétiques longitudinaux 11, soit orientée vers l'extérieur de la tige cylindrique 2 et qu'une grande base 10b soit orientée vers l'intérieur.

Les ensembles magnétiques longitudinaux 11 sont également fixés au dispositif de support 3 de manière à ce qu'une face nord 11N, respectivement sud 11S, d'un ensemble magnétique longitudinal 11 soit orientée vers la face nord 11N, respectivement sud 11S, de l'ensemble magnétique longitudinal 11 voisin. L'orientation des faces nord 11N et sud 11S peut être effectuée en retournant longitudinalement les ensembles magnétiques longitudinaux 11.

Comme illustré en Figure 6, le dispositif de support réglable 3 et la tige cylindrique 2 sont organisés de manière à ce que, lors du montage, un ensemble magnétique longitudinal 11 soit disposé entre un secteur de vis nord 6N et un secteur de vis sud 6S. La face nord 11N, respectivement sud 11S, d'un ensemble magnétique longitudinal 11 est orientée vers un secteur de vis nord 6N, respectivement sud 6S.

A la fin de la phase de montage, les ensembles magnétiques longitudinaux 11 sont déplacés de la position basse vers la position haute.

Or, pour chaque secteur de vis 6N, 6S, les surfaces d'extrémité 6e en regard des secteurs de vis adjacents 6N, 6S, dans une direction radiale, sont en biseau, de façon à former, dans les espaces inter-secteur 18, une zone 18a dont la section transversale a un profil de forme triangulaire dont une pointe est orientée radialement vers l'extérieur.

On comprendra que cette configuration est choisie pour maximiser une zone dite de contact 19 entre lesdits secteurs de vis 6N, 6S, et l'ensemble magnétique longitudinal 11 respectif, et donc que suivant des variantes de la présente invention la configuration des surfaces d'extrémité 6e sera adaptée à la forme de coin choisie.

Ainsi, lorsque les ensembles magnétiques longitudinaux 11 sont déplacés vers la position haute, lesdits ensembles magnétiques longitudinaux 11 sont reçus dans un espace inter-secteur 18 jusqu'à entrer en contact avec les secteurs de vis 6N, 6S à la zone dite de contact 19.

Les parties en saillie 6a des secteurs de vis 6N, 6S peuvent alors guider les champs magnétiques créés par les ensembles magnétiques longitudinaux 11 suivant les hélices nord HN et sud HS.

De plus, le dispositif de support réglable 3 permet de faire monter les ensembles magnétiques longitudinaux 11 jusqu'à mettre lesdits ensembles magnétiques longitudinaux 11 en contact par pression avec les secteurs de vis 6N, 6S de manière à empêcher la formation d'entrefers entre lesdits ensembles magnétiques longitudinaux 11 et lesdits secteurs de vis 6N, 6S à la zone de contact 19, ce qui permet d'améliorer les propriétés magnétiques de la vis 1 et des champs magnétiques créés par ladite vis magnétique 1.

La tenue mécanique de la tige cylindrique 2, lors de la mise en contact par pression, est garantie par les bras 7, les éléments centraux 8 et les tiges de maintien 17.

En tournant les vis de réglage 15 dans un sens ou dans l'autre dans les deux éléments de support 13, les cales 12 équipées des aimants 11a passent donc d'une position basse à haute et réciproquement, sans dommage des aimants 11a. Dans la position haute, les cales 12 sont en contact parfait avec les concentrateurs 61N, 61S. Cet assemblage et ce désassemblage des cales 12 avec leur aimants 11a permettent de maîtriser la mise en contact des cales 12 aimantées avec les concentrateurs 61N, 61S. Comme les vis de réglage 15 sont indépendantes, il est donc possible de rattraper tous les jeux en serrant les vis de réglage 15, et ainsi supprimer les entrefers parasites (il n'y a pas d'air dans la zone de contact 19) et d'assurer la concentricité de la vis 1. Avantageusement, les cales 12 avec les aimants 11a peuvent être fabriquées en parallèle de la fabrication des autres pièces constituants la vis 1. Les cales 12, de préférence en acier magnétisable, protègent les aimants 11a lors de la pose et dépose dans la vis 1.

Une fois un ensemble magnétique longitudinal 11 déposé, ce dernier peut être réutilisé sur une autre vis ou bien les aimants 11a peuvent être facilement récupérés.

Afin d'améliorer encore davantage les propriétés des champs magnétiques créés par la vis 1, la présente invention prévoit l'utilisation d'aimants en forme de tuile ayant une face concave et une face convexe opposée. Les aimants en forme de tuile utilisés sont séparés en aimants tuiles dits nord 20N dont la face convexe est polarisée nord et la face concave est polarisée sud, et en aimants tuiles dits sud 20S dont la face convexe est polarisé sud et la face concave est polarisée nord.

Comme illustré en Figure 3, les aimants tuiles nord 20N sont fixés, de préférence par collage avant aimantation du concentrateur respectif pour plus de facilité, sur les parties en creux 6b des secteurs de vis sud 6S. De la même manière, les aimants tuiles sud 20S sont fixés, par collage, sur les parties en creux 6b des secteurs de vis nord 6N.

Avantageusement le collage des aimants tuiles est réalisé avant la mise en contact des ensembles magnétiques longitudinaux 11 et des secteurs de vis 6N, 6S ou avant le montage de la vis magnétique 1.

Cette disposition des aimants tuiles 20N, 20S permet de sensiblement réduire les discontinuités des champs magnétiques le long des hélices nord HN et sud HS lors du passage au-dessus des parties en creux 6b et permet d'augmenter les valeurs moyennes des champs magnétiques.

Dans le même but, et comme illustré en Figure 6, les sections d'extrémité 6d des parties en saillie 6a comprennent une protubérance 6g qui s'avance obliquement, dans l'espace inter-secteur 18 adjacent, vers la partie en creux 6b opposée du secteur de vis adjacent dans une direction radiale et de polarité opposée.

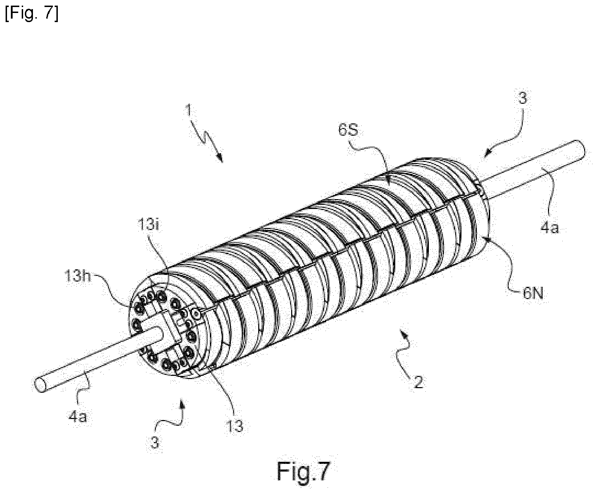

Si l'on se réfère maintenant aux Figures 7 à 9, on peut voir que l'on y a représenté une vis magnétique 1 selon un second mode de réalisation de la présente invention.

Dans ce mode de réalisation, le dispositif de support réglable 3 comprend deux demi-arbres 4a, s'étendant dans des directions distales à partir des éléments de support 13, et comprenant l'organe de transmission d'entraînement, qui n'a pas été représenté sur ces Figures pour plus de lisibilité mais qui peut notamment être un pignon monté sur le demi-arbre 4a, un demi-arbre 4a cannelé ou un demi-arbre 4a présentant une rainure dans laquelle peut être insérée une clavette, sans limitation de la présente invention à ces solutions techniques.

Les demi-arbres 4a pouvant être formés d'un seul tenant avec les éléments de support 13 respectifs ou, en variante, être fixés aux éléments de support 13, par exemple mais sans limitation à cette solution, à l'aide de vis.

Les demi-arbres 4a peuvent être de diamètre plus important qu'un arbre central 4 traversant la vis magnétique 1, ce qui permet un transfert d'effort plus important.

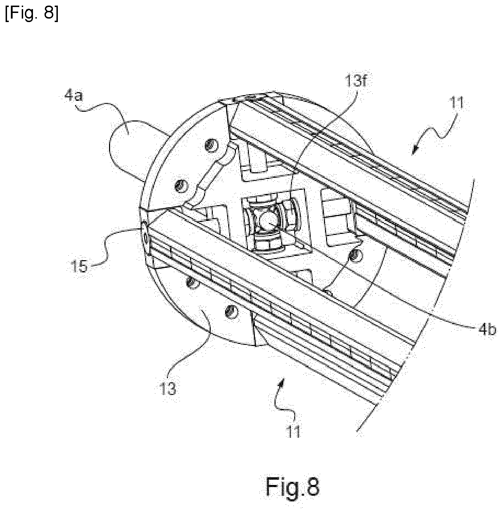

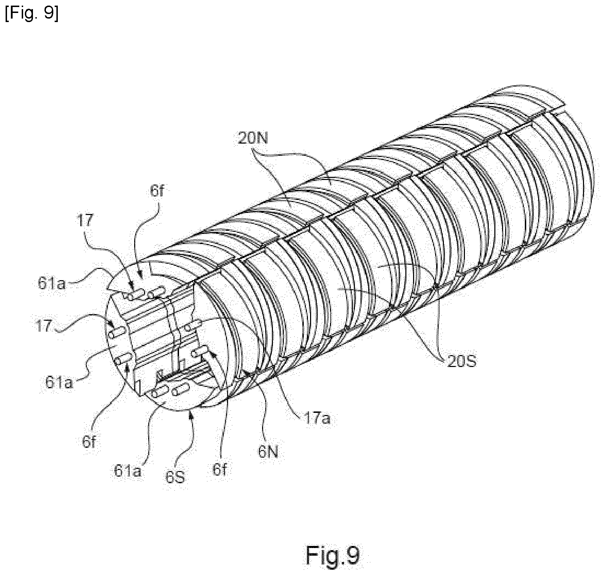

Comme cela est visible sur la Figure 8, les demi-arbres 4a comprennent des saillies 4b qui s'étendent à partir d'un demi-arbre 4a vers l'intérieur de la tige cylindrique 2 le long de l'axe longitudinal de la vis magnétique 1. Les saillies 4b permettent de maintenir en position les éléments taraudés13f après montage. En se référant plus particulièrement à la Figure 9, on peut voir que, pour ce mode de réalisation, les secteurs de vis 6N, 6S ne comprennent pas de parties s'étendant radialement vers l'axe longitudinal de la vis magnétique 1.

Les secteurs de vis 6N, 6S, sont fixés à l'aide d'un agencement de tiges de maintien 17 analogue à celui de la vis magnétique 1 représentée sur les Figures 1 à 6.

Comme pour le mode de réalisation représenté en Figures 1 à 6, les secteurs de vis 6N, 6S, de la vis magnétique 1 selon le mode de réalisation représenté en Figures 7 à 9, peuvent être formés d'un seul tenant, avec une seule section de surface 61a, ou par une juxtaposition de plusieurs sections de surface 61a. Dans les deux cas, chaque section de surface comprend des trous traversants 6f.

Le montage peut alors être réalisé par enfilage des sections de surface 61a sur les tiges de maintien 17, par les trous traversants 6f, puis par fixation des tiges de maintien 17 au dispositif de support 3. La fixation des tiges de maintien 17 au dispositif de support 3 étant analogue au mode de réalisation représenté sur les Figures 1 à 6.

De préférence, les tiges de maintien 17 sont réalisées en matériau non magnétisable pour faciliter le montage et l'enfilage des sections de surface 61a sur les tiges de maintien 17.

On comprendra qu'après montage de la vis magnétique 1, la tige cylindrique 2 est solidaire en rotation et en translation des demi-arbres 4a par l'intermédiaire des éléments de support 13 à l'aide des tiges de maintien 17 et des ensembles magnétiques longitudinaux 11.

Il est bien entendu que le mode de réalisation particulier qui vient d'être décrit a été donné à titre indicatif et non limitatif, et que des modifications peuvent être apportées dans les limites de revendications ci-dessous.

### Liste des chiffres de référence

HN, HS : hélice Nord, Sud
1 : vis magnétique
2 : tige cylindrique creuse
2a : espace intérieur
3 : dispositif de support réglable
4 : arbre central
4a : demi-arbre
4b : saillie
5 : organe de transmission d'entraînement
6N, 6S : secteurs de vis Nord, Sud
6a : parties en saillie
6b : parties en creux
6c : surface externe
6d : section d'extrémité (de partie en saillie)
6e : surface d'extrémité
6f : trou traversant
6g : protubérance
61N, 61S : concentrateur de flux Nord, Sud
61a : section de surface
61b : plot
7 : bras
8 : élément central
8a : trou
9 : entretoise
9a : section de plus faible diamètre
10 : profil trapézoïdal
10a : petite base
10b : grande base
11 : ensemble magnétique longitudinal
11a : aimant permanent
11N, 11S : face Nord, Sud
12 : cale
12a : trou taraudé
13 : élément de support
13a : trou traversant (pour arbre central)
13b : chambre
13c : côté distal transverse au trou
13d : rainure
13e : trou (fond rainure)
13f : élément taraudé
13g : trou traversant (pour tige de maintien)
13h : lamage
13i : écrou
14 : pièce d'extrémité
14a : trou taraudé traversant
14b : fraisure
14c : trou traversant (pour fixation cale)
15 : vis de réglage
16 : vis de fixation
17 : tige de maintien
17a : extrémité filetée
18 : espace inter-secteur
18a : zone triangulaire
19 : zone de contact
20N, 20S : aimant tuile dit Nord, Sud

## Revendications

1. - Vis magnétique (1) apte à être entraînée en rotation autour d'un axe et/ou en translation sur ledit axe, ladite vis magnétique (1) étant constituée d'un nombre pair de pôles magnétiques et comprenant :
- un organe de transmission d'entraînement (5) ;
- une tige cylindrique (2), la surface latérale externe (6c) de la tige cylindrique (2) étant constituée par un matériau magnétisable et divisée en autant de secteurs de vis (6N, 6S) longitudinaux qu'il y a de pôles magnétiques sur la vis magnétique (1), chaque secteur de vis (6N, 6S) étant formé par l'une parmi une section de surface (61a) et une juxtaposition axiale de sections de surface (61a), chaque secteur de vis (6N, 6S) étant séparé d'un secteur de vis (6S, 6N) adjacent par un espace inter-secteur (18) s'étendant selon la direction longitudinale de la tige cylindrique (2), une alternance de parties en creux (6b) et de parties en saillie (6a) étant formées sur chaque secteur de vis (6N, 6S), les parties en creux (6b) et les parties en saillie (6a) étant agencées de façon hélicoïdale sur la tige cylindrique (2) de telle sorte que, sur une hélice (HN, HS) donnée formée sur la surface latérale externe (6c) de la tige cylindrique (2), une partie en creux (6b), respectivement une partie une saillie (6a), formée sur un secteur de vis (6N, 6S) prolonge une partie en saillie (6a), respectivement une partie en creux (6b), formée de l'autre côté de l'espace inter-secteur (18) sur le secteur de vis (6S, 6N) adjacent ;
- des ensembles magnétiques longitudinaux (11) en même nombre qu'il y a de pôles magnétiques sur la vis magnétique (1), chaque ensemble magnétique longitudinal (11) comprenant au moins un aimant (11a) et chaque ensemble magnétique longitudinal (11) étant configuré pour être disposé dans un espace inter-secteur (18) entre deux secteurs de vis (6N, 6S) adjacents et en contact avec deux secteurs de vis (6N, 6S) adjacents, une fois en contact, la face nord (11N) d'un ensemble magnétique longitudinal (11) polarisant un secteur de vis en secteur de vis nord (6N) et la face sud (11S) dudit ensemble magnétique longitudinal (11) polarisant un secteur de vis, adjacent au secteur de vis nord (6N), en secteur de vis sud (6S) ;
**caractérisée par le fait que** :
- au moins un ensemble magnétique longitudinal (11) est constitué par deux cales (12) en matériau magnétisable prenant en sandwich l'au moins un aimant (11a) et protégeant l'au moins un aimant (11a) mécaniquement, les cales (12) étant biseautées de telle sorte que ledit au moins un ensemble magnétique longitudinal (11) a une forme de coin en coupe transversale, et ledit au moins un ensemble magnétique longitudinal (11) comporte également une pièce d'extrémité (14) à chaque extrémité ;
- la vis magnétique comprend en outre un dispositif de support réglable (3), solidarisé à l'organe de transmission d'entraînement (5), sur lequel ledit au moins un ensemble magnétique longitudinal (11) est monté mobile par l'intermédiaire des pièces d'extrémité (14) entre une position basse distante des secteurs de vis (6N, 6S) et une position haute en contact avec les secteurs de vis (6N, 6S) à l'état monté de la vis magnétique (1) ; et
- la vis magnétique (1) est assemblée par liaison de chaque section de surface (61a) composant un secteur de vis (6N, 6S) à au moins l'un parmi un autre secteur de vis (6N, 6S) et le dispositif de support (3).

2. - Vis magnétique (1) selon la revendication 1, **caractérisée par le fait que** le dispositif de support réglable (3) comprend un arbre central (4) parallèle à l'axe longitudinal de la vis magnétique (1).

3. - Vis magnétique (1) selon la revendication 2, **caractérisée par le fait que** la tige cylindrique (2) est formée par un assemblage de concentrateurs dits nord (61N) et sud (61S) ; un concentrateur nord (61N), respectivement sud (61S), comprenant autant de sections de surface (61a) qu'il y a de secteurs de vis polarisés nord (6N), respectivement sud (6S), et un élément central (8) à partir duquel s'étendent des bras (7) configurés pour relier chaque section de surface (61a) dudit concentrateur de flux (61N, 61S) à l'élément central (8) respectif ; et l'élément central (8) d'un concentrateur de flux (61N, 61S) étant configuré pour relier le concentrateur de flux (61N, 61S) à l'arbre central (4).

4. - Vis magnétique (1) selon l'une quelconque des revendications 2 et 3, **caractérisée par le fait qu'**au moins une des sections de surface (61a) est reliée à l'arbre central (4).

5. - Vis magnétique (1) selon l'une quelconque des revendications 1 à 4, **caractérisée par le fait qu'**au moins une section de surface (61a) est reliée à au moins un secteur de vis (6N, 6S) adjacent, dans une direction radiale, polarisé de manière opposée.

6. - Vis magnétique selon l'une quelconque des revendications 1 à 5, **caractérisée par le fait qu'**au moins une section de surface (61a) est reliée, par un élément autre qu'un ensemble magnétique longitudinal (11), au dispositif de support réglable (3), et le cas échéant sur une partie autre que l'arbre central (4).

7. - Vis magnétique selon l'une quelconque des revendications 1 à 6, **caractérisée par le fait qu'**au moins une section de surface (61a) est reliée à au moins une autre section de surface (61a) du même secteur de vis (6N, 6S).

8. - Vis magnétique (1) selon l'une quelconque des revendications 1 à 7, **caractérisée par le fait qu'**au moins une section de surface (61a) est reliée à au moins un autre secteur de vis (6N, 6S) de même polarité.

9. - Vis magnétique selon l'une quelconque des revendications 1 à 8, **caractérisée par le fait que** la vis magnétique (1) comprend en outre au moins une entretoise (9) configurée pour permettre un positionnement axial relatif d'au moins deux sections de surface (61a).

10. - Vis magnétique (1) selon l'une quelconque des revendications 1 à 9, **caractérisée par le fait que** le dispositif de support réglable (3) comprend deux éléments de support (13) ayant chacun autant de rainures (13d) qu'il y a d'ensembles magnétiques longitudinaux (11) comprenant des pièces d'extrémité (14), lesdites rainures (13d) étant configurées pour recevoir les pièces d'extrémité (14) desdits ensembles magnétiques longitudinaux (11), et les pièces d'extrémité (14) desdits ensembles magnétiques longitudinaux (11) étant mobiles dans lesdites rainures (13d) par réglage du dispositif de support réglable (3).

11. - Vis magnétique (1) selon l'une quelconque des revendications 1 à 10, **caractérisée par le fait que** les secteurs de vis (6N, 6S) sont engagés avec le dispositif de support réglable (3) et **par le fait que** la vis magnétique (1) comprend au moins un élément axial (4, 17) solidaire du dispositif de support réglable (3) configuré pour permettre de serrer axialement la tige cylindrique (2).

12. - Vis magnétique (1) selon l'une quelconque des revendications 1 à 11, **caractérisée par le fait que** les sections de surface (61a) sont fabriquées par empilement de tôles réalisées en matériau magnétisable.

13. - Vis magnétique selon l'une quelconque des revendications 1 à 12, **caractérisée par le fait que** la vis magnétique comprend en outre des aimants en forme de tuile dits nord (20N) et dits sud (20S) fixés sur des secteurs de vis (6N, 6S), les aimants en forme de tuile dits nord (20N) étant disposés, avec leur face polarisée nord orientée vers l'extérieur, dans des parties en creux (6b) de secteurs de vis polarisés sud (6S), et des aimants en forme de tuile dits sud (20S) étant disposés, avec leur face polarisée sud orientée vers l'extérieur, dans des parties en creux (6b) de secteurs de vis polarisés nord (6N).

14. - Vis magnétique (1) selon l'une quelconque des revendications 1 à 13, **caractérisée par le fait qu'**au moins une section d'extrémité (6d) d'au moins l'une des parties en saillie (6a) comprend une protubérance (6g) qui s'avance obliquement, dans l'espace inter-secteur (18) adjacent, vers la partie en creux (6b) opposée du secteur de vis (6N, 6S) adjacent, dans une direction radiale, polarisé de manière opposée.

15. - Vis magnétique (1) selon l'un quelconque des revendications 1 à 14, **caractérisée par le fait que** l'au moins un aimant (11a) des ensembles magnétiques longitudinaux (11) est constitué par l'un parmi des aimants permanents et des électro-aimants.

## Patentansprüche

1. - Magnetische Schraube (1), die geeignet ist, um um eine Achse in Rotation und/oder Translation auf dieser Achse angetrieben zu werden, wobei die magnetische Schraube (1) aus einer geraden Anzahl von Magnetpolen besteht und Folgendes umfasst:
- ein Antriebsübertragungsorgan (5);
- einen zylindrischen Schaft (2), wobei die äußere Seitenfläche (6c) des zylindrischen Schafts (2) aus einem magnetisierbaren Material besteht und in so viele Längsschraubensektoren (6N, 6S) unterteilt ist, wie es magnetische Pole auf der magnetischen Schraube (1) gibt, wobei jeder Schraubensektor (6N, 6S) durch eines von einem Oberflächenabschnitt (61a) und einer axialen Aneinanderreihung von Oberflächenabschnitten (61a) gebildet ist, wobei jeder Schraubensektor (6N, 6S) von einem angrenzenden Schraubensektor (6S, 6N) durch einen Sektorzwischenraum (18) getrennt ist, der sich in Längsrichtung des zylindrischen Schafts (2) erstreckt, eine Abfolge von vertieften Teilen (6b) und hervorstehenden Teilen (6a) an jedem Schraubensektor (6N, 6S) gebildet ist, wobei die vertieften Teile (6b) und die hervorstehenden Teile (6a) schraubenförmig auf dem zylindrischen Schaft (2) ausgebildet sind, sodass auf einer Schraubenlinie (HN, HS), die auf der äußeren Seitenfläche (6c) des zylindrischen Schafts (2) gebildet ist, ein vertiefter Teil (6b) bzw. ein hervorstehender Teil (6a), der auf einem Schraubensektor (6N, 6S) ausgebildet ist, einen hervorstehenden Teil (6a) bzw. einen vertieften Teil (6b) verlängert, der auf der anderen Seite des Sektorzwischenraums (18) auf dem angrenzenden Schraubensektor (6S, 6N) gebildet ist;
- magnetische Längseinheiten (11) in der gleichen Anzahl, wie es Magnetpole an der magnetischen Schraube (1) gibt, jede magnetische Längseinheit (11) umfassend mindestens einen Magneten (11a) und wobei jede Längsmagnetanordnung (11) konfiguriert ist, um in einem Sektorzwischenraum (18) zwischen zwei benachbarten Schraubensektoren (6N, 6S) und in Kontakt mit zwei angrenzenden Schraubensektoren (6N, 6S) angeordnet zu sein, wobei nachdem sie in Kontakt sind, die nördliche Seite (11N) einer magnetischen Längseinheit (11) einen Schraubensektor in den nördlichen Schraubensektor (6N) polarisiert und die südliche Seite (11S) der magnetischen Längseinheit (11) einen Schraubensektor, der an den nördlichen Schraubensektor (6N) angrenzt, in den südlichen Schraubensektor (6S) polarisiert;
**dadurch gekennzeichnet, dass**:
- mindestens eine magnetische Längseinheit (11) aus zwei Keilen (12) aus magnetisierbarem Material besteht, die den mindestens einen Magneten (11a) sandwichartig umschließen und den mindestens einen Magneten (11a) mechanisch schützen, wobei die Keile (12) abgeschrägt sind, sodass die mindestens eine magnetische Längseinheit (11) im Querschnitt keilförmig ist, und die mindestens eine magnetische Längseinheit (11) ferner an jedem Ende ein Endstück (14) umfasst;
- die magnetische Schraube ferner eine einstellbare Halterungsvorrichtung (3) umfasst, die fest mit dem Antriebsübertragungsorgan (5) verbunden ist, auf der die mindestens eine magnetische Längseinheit (11) über die Endstücke (14) zwischen einer unteren Position, die von den Schraubensektoren (6N, 6S) entfernt ist, und einer oberen Position, die in dem montierten Zustand der magnetische Schraube (1) mit den Schraubensektoren (6N, 6S) in Kontakt ist, beweglich montiert ist; und
- die magnetische Schraube (1) durch Verbinden von jedem Oberflächenabschnitt (61a), der einen Schraubensektor (6N, 6S) bildet, mit mindestens einem von einem anderen Schraubensektor (6N, 6S) und der Halterungsvorrichtung (3) zusammengebaut wird.

2. - Magnetische Schraube (1) nach Anspruch 1, **dadurch gekennzeichnet, dass** die einstellbare Halterungsvorrichtung (3) eine mittlere Welle (4) parallel zu der Längsachse der magnetischen Schraube (1) umfasst.

3. - Magnetische Schraube (1) nach Anspruch 2, **dadurch gekennzeichnet, dass** der zylindrische Schaft (2) durch eine Zusammenstellung von sogenannten nördlichen (61N) und südlichen (61S) Konzentratoren gebildet ist; ein nördlicher (61N) bzw. südlicher (61S) Konzentrator umfassend so viele Oberflächenabschnitte (61a), wie es polarisierte nördliche (6N) bzw. südliche (6S) Schraubensektoren gibt, und ein mittleres Element (8), von dem sich Arme (7) erstrecken, die konfiguriert sind, um jeden Oberflächenabschnitt (61a) des Flusskonzentrators (61N, 61S) mit dem jeweiligen mittleren Element (8) zu verbinden; und wobei das mittlere Element (8) eines Flusskonzentrators (61N, 61S) konfiguriert ist, um den Flusskonzentrator (61N, 61S) mit der mittleren Welle (4) zu verbinden.

4. - Magnetische Schraube (1) nach einem der Ansprüche 2 oder 3, **dadurch gekennzeichnet, dass** mindestens einer der Oberflächenabschnitte (61a) mit der mittleren Welle (4) verbunden ist.

5. - Magnetische Schraube (1) nach einem der Ansprüche 1 bis 4, **dadurch gekennzeichnet, dass** mindestens ein Oberflächenabschnitt (61a) mit mindestens einem in einer radialen Richtung angrenzenden, entgegengesetzt polarisierten Schraubensektor (6N, 6S) verbunden ist.

6. - Magnetische Schraube nach einem der Ansprüche 1 bis 5, **dadurch gekennzeichnet, dass** mindestens ein Oberflächenabschnitt (61a) durch ein anderes Element als eine magnetische Längseinheit (11) mit der einstellbaren Haltevorrichtung (3) und gegebenenfalls an einem anderen Teil als der mittleren Welle (4) verbunden ist.

7. - Magnetische Schraube nach einem der Ansprüche 1 bis 6, **dadurch gekennzeichnet, dass** mindestens ein Oberflächenabschnitt (61a) mit mindestens einem anderen Oberflächenabschnitt (61a) desselben Schraubensektors (6N, 6S) verbunden ist.

8. - Magnetische Schraube (1) nach einem der Ansprüche 1 bis 7, **dadurch gekennzeichnet, dass** mindestens ein Oberflächenabschnitt (61a) mit mindestens einem anderen Schraubensektor (6N, 6S) derselben Polarität verbunden ist.

9. - Magnetische Schraube nach einem der Ansprüche 1 bis 8, **dadurch gekennzeichnet, dass** die magnetische Schraube (1) ferner mindestens einen Abstandhalter (9) umfasst, der konfiguriert ist, um eine relative axiale Positionierung von mindestens zwei Oberflächenabschnitten (61a) zu ermöglichen.

10. - Magnetische Schraube (1) nach einem der Ansprüche 1 bis 9, **dadurch gekennzeichnet, dass** die einstellbare Halterungsvorrichtung (3) zwei Halterungselemente (13) umfasst, die jeweils so viele Nuten (13d) aufweisen, wie es magnetische Längseinheiten (11) gibt, die Endstücke (14) umfassen, wobei die Nuten (13d) konfiguriert sind, um die Endstücke (14) der magnetischen Längseinheiten (11) aufzunehmen, und wobei die Endstücke (14) der magnetischen Längseinheiten (11) durch Einstellen der einstellbaren Halterungsvorrichtung (3) in den Nuten (13d) bewegbar sind.

11. - Magnetische Schraube (1) nach einem der Ansprüche 1 bis 10, **dadurch gekennzeichnet, dass** die Schraubensektoren (6N, 6S) mit der einstellbaren Halterungsvorrichtung (3) eingegriffen werden und dass die magnetische Schraube (1) mindestens ein axiales Element (4, 17) umfasst, das fest mit der einstellbaren Halterungsvorrichtung (3) verbunden und konfiguriert ist, um den zylindrischen Schaft (2) axial festzuklemmen.

12. - Magnetische Schraube (1) nach einem der Ansprüche 1 bis 11, **dadurch gekennzeichnet, dass** die Oberflächenabschnitte (61a) durch Stapeln von Blechen hergestellt sind, die aus magnetisierbarem Material gefertigt sind.

13. - Magnetische Schraube nach einem der Ansprüche 1 bis 12, **dadurch gekennzeichnet, dass** die magnetische Schraube ferner sogenannte ziegelförmige nördliche (20N) und südliche (20S) Magnete umfasst, die an Schraubensektoren (6N, 6S) befestigt sind, wobei die ziegelförmigen nördlichen Magnete (20N) in vertieften Teilen (6b) von südlichen polarisierten Schraubensektoren (6S) mit ihrer nördlichen polarisierten Seite nach außen angeordnet sind, und wobei die südlichen ziegelförmigen Magnete (20S) in vertieften Teilen (6b) von nördlichen polarisierten Schraubensektoren (6N) mit ihrer südlichen polarisierten Seite nach außen angeordnet sind.

14. - Magnetische Schraube (1) nach einem der Ansprüche 1 bis 13, **dadurch gekennzeichnet, dass** mindestens ein Endabschnitt (6d) mindestens eines der hervorstehenden Teile (6a) einen Vorsprung (6g) aufweist, der schräg in den angrenzenden Sektorzwischenraum (18) zu dem gegenüberliegenden vertieften Teil (6b) des entgegengesetzt polarisierten angrenzenden Schraubensektors (6N, 6S) in einer radialen Richtung hervorsteht.

15. - Magnetische Schraube (1) nach einem der Ansprüche 1 bis 14, **dadurch gekennzeichnet, dass** der mindestens eine Magnet (11a) der magnetischen Längseinheiten (11) aus einem von Permanentmagneten und Elektromagneten besteht.

## Claims

1. - A magnetic screw (1) able to be rotated about an axis and/or translated on said axis, said magnetic screw (1) being made up of an even number of magnetic poles and comprising:
- a drive transmission member (5);
- a cylindrical rod (2), the outer lateral surface (6c) of the cylindrical rod (2) being made up of a magnetizable material and divided into as many longitudinal screw sectors (6N, 6S) as there are magnetic poles on the magnetic screw (1), each screw sector (6N, 6S) being formed by one of a surface section (61a) and an axial juxtaposition of surface sections (61a), each screw sector (6N, 6S) being separated from an adjacent screw sector (6S, 6N) by an inter-sector space (18) extending along the longitudinal direction of the cylindrical rod (2), an alternation of recessed parts (6b) and projecting parts (6a) being formed on each screw sector (6N, 6S), the recessed parts (6b) and the projecting parts (6a) being arranged helically on the cylindrical rod (2) such that, on a given helix (HN, HS) formed on the outer lateral surface (6c) of the cylindrical rod (2), a recessed part (6b), respectively a projecting part (6a), formed on a screw sector (6N, 6S) extends a projecting part (6a), respectively a recessed part (6b), formed on the other side of the inter-sector space (18) on the adjacent screw sector (6S, 6N);
- longitudinal magnetic assemblies (11) in the same number as there are magnetic poles on the magnetic screw (1), each longitudinal magnetic assembly (11) comprising at least one magnet (11a) and each longitudinal magnetic assembly (11) being configured to be arranged in an inter-sector space (18) between two adjacent screw sectors (6N, 6S) and in contact with two adjacent screw sectors (6N, 6S), once in contact, the north face (11N) of a longitudinal magnetic assembly (11) polarizing a screw sector into a north screw sector (6N) and the south face (11S) of said longitudinal magnetic assembly (11) polarizing a screw sector, adjacent to the north screw sector (6N), into a south screw sector (6S) ;
**characterized by** the fact that:
- at least one longitudinal magnetic assembly (11) consists of two wedges (12) made of magnetizable material sandwiching the at least one magnet (11a) and protecting the at least one magnet (11a) mechanically, the wedges (12) being beveled such that said at least one longitudinal magnetic assembly (11) has a wedge shape in cross-section, and said at least one longitudinal magnetic assembly (11) also has an endpiece (14) at each end;
- the magnetic screw further comprises an adjustable support device (3), secured to the drive transmission member (5), on which said at least one longitudinal magnetic assembly (11) is movably mounted via the endpieces (14) between a low position remote from the screw sectors (6N, 6S) and a high position in contact with the screw sectors (6N, 6S) in the assembled state of the magnetic screw (1); and
- the magnetic screw (1) is assembled by bonding each surface section (61a) making up a screw sector (6N, 6S) to at least one of another screw sector (6N, 6S) and the support device (3) .

2. - The magnetic screw (1) according to claim 1, **characterized in that** the adjustable support device (3) comprises a central shaft (4) parallel to the longitudinal axis of the magnetic screw (1).

3. - The magnetic screw (1) according to claim 2, **characterized in that** the cylindrical rod (2) is formed by an assembly of so-called north (61N) and south (61S) concentrators; a north (61N), respectively south (61S) concentrator, comprising as many surface sections (61a) as there are north (6N), respectively south (6S) polarized screw sectors, and a central element (8) from which arms (7) extend which are configured to connect each surface section (61a) of said flux concentrator (61N, 61S) to the respective central element (8); and the central element (8) of a flux concentrator (61N, 61S) being configured to connect the flux concentrator (61N, 61S) to the central shaft (4) .

4. - The magnetic screw (1) according to any one of claims 2 and 3, **characterized in that** at least one of the surface sections (61a) is connected to the central shaft (4).

5. - The magnetic screw (1) according to any one of claims 1 to 4, **characterized in that** at least one surface section (61a) is connected to at least one adjacent screw sector (6N, 6S), in a radial direction, oppositely polarized.

6. - The magnetic screw according to any one of claims 1 to 5, **characterized in that** at least one surface section (61a) is connected, by an element other than a longitudinal magnetic assembly (11), to the adjustable support device (3), and if necessary on a part other than the central shaft (4).

7. - The magnetic screw according to any one of claims 1 to 6, **characterized in that** at least one surface section (61a) is connected to at least one other surface section (61a) of the same screw sector (6N, 6S).

8. - The magnetic screw (1) according to any one of claims 1 to 7, **characterized in that** at least one surface section (61a) is connected to at least one other screw sector (6N, 6S) of the same polarity.

9. - The magnetic screw according to any one of claims 1 to 8, **characterized in that** the magnetic screw (1) further comprises at least one spacer (9) configured to allow relative axial positioning of at least two surface sections (61a).

10. - The magnetic screw (1) according to any one of claims 1 to 9, **characterized in that** the adjustable support device (3) comprises two support elements (13) each having as many grooves (13d) as there are longitudinal magnetic assemblies (11) comprising endpieces (14), said grooves (13d) being configured to receive the endpieces (14) of said longitudinal magnetic assemblies (11), and the endpieces (14) of said longitudinal magnetic assemblies (11) being movable in said grooves (13d) by adjustment of the adjustable support device (3).

11. - The magnetic screw (1) according to any one of claims 1 to 10, **characterized in that** the screw sectors (6N, 6S) are engaged with the adjustable support device (3) and **in that** the magnetic screw (1) comprises at least one axial element (4, 17) secured to the adjustable support device (3) configured to allow the cylindrical rod (2) to be axially clamped.

12. - The magnetic screw (1) according to any one of claims 1 to 11, **characterized in that** the surface sections (61a) are manufactured by stacking sheets made of magnetizable material.

13. - The magnetic screw according to any one of claims 1 to 12, **characterized in that** the magnetic screw further comprises tile-shaped magnets called north (20N) and south (20S) attached on screw sectors (6N, 6S), the so-called north tile-shaped magnets (20N) being arranged, with their north polarized face facing outwards, in recessed parts (6b) of south polarized screw sectors (6S), and the so-called south tile-shaped magnets (20S) being arranged, with their south polarized face facing outwards, in recessed parts (6b) of north polarized screw sectors (6N) .

14. - The magnetic screw (1) according to any one of claims 1 to 13, **characterized in that** at least one end section (6d) of at least one of the projecting parts (6a) comprises a protuberance (6g) which projects obliquely, in the adjacent inter-sector space (18), towards the opposite hollow part (6b) of the adjacent screw sector (6N, 6S), in a radial direction, oppositely polarized.

15. - The magnetic screw (1) according to any one of claims 1 to 14, **characterized in that** the at least one magnet (11a) of the longitudinal magnetic assemblies (11) consists of one of permanent magnets and electromagnets.
